(19) Europäisches Patentamt
European Patent Office
Office européen des brevets

(11) Publication number: **0 540 044 A1**

(12) # EUROPEAN PATENT APPLICATION

(21) Application number: **92118679.7**

(22) Date of filing: **31.10.92**

(51) Int. Cl.5: **C09K 19/42**, C09K 19/54, C09K 19/30, G02F 1/1333

(30) Priority: **01.11.91 EP 91710038**

(43) Date of publication of application: **05.05.93 Bulletin 93/18**

(84) Designated Contracting States: **DE GB**

(71) Applicant: **MERCK PATENT GESELLSCHAFT MIT BESCHRÄNKTER HAFTUNG**
**Frankfurter Strasse 250**
**W-6100 Darmstadt(DE)**

(72) Inventor: **Coates, David**
**87 Sopwith Crescent, Merley**
**Wimborne, Dorset BH21 3SW(GB)**
Inventor: **Nolan, Patrick**
**16 Calborne Close**
**Baiter Park, Pool BH15 1VF(GB)**
Inventor: **Marden, Shirley Ann**
**244 Ringwood Road**
**Parkstone, Poole BH14 0RS(GB)**
Inventor: **Brown, Emma Jane**
**77 Cranleigh Road**
**Southbourne, Bournemouth BH6 5JX(GB)**
Inventor: **Finkenzeller, Ulrich**
**Waldpfad 74**
**W-6831 Plankstadt(DE)**
Inventor: **Jubb, Raymond**
**Graupnerweg 42**
**W-6100 Darmstadt(DE)**

(54) **Nematic liquid-crystal composition.**

(57) The invention relates to a nematic liquid-crystal composition based on terminally and laterally halogenated compounds for active matrix displays with a high voltage holding ratio and a high birefringence.

Fig.2

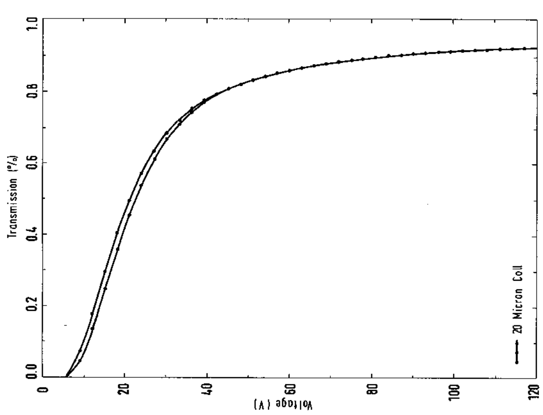


EP 0 540 044 A1

The invention relates to a nematic liquid-crystal composition based on terminally and laterally halogenated compounds. This composition is especially useful for active matrix application.

Active matrix displays (AMD) are highly favored for commercially interesting displays with a high information content. Such AMDs are used for TV application and also for displays with high information content for computer terminals, automobiles and aeroplanes.

AMDs have non-linear electrical switching elements which are integrated at each picture element. As non-linear driving elements thin film transistors (TFT) [Okubo, U., et al., 1982, SID 82 Digest, pp. 40-41] or diodes (e.g.: metal insulator metal: MIM) [Niwa, K., et al., 1984, SID 84, Digest, pp. 304-307] can be applied. These non-linear driving elements allow to use an electro-optical effect with a rather flat electro-optical characteristic if a good viewing angle characteristic can be obtained. So a TN-type LC cell [Schadt, M. and Helfrich, W., 1971, Appl. Phys. Lett., 18, 127] with a twist angle of 90° can be used. To provide the good contrast over a wide viewing angle, operation in the first minimum of transmission [Pohl, L., Eidenschink, R., Pino, F. del., and Weber, G., 1980, German Pat., DBP 30 22 818, and 1981, US Pat. 4 398 803; Pohl, L., Weber, G., Eidenschink, R., Baur, G., and Fehrenbach, W., 1981, Appl. Phys. Lett., 38, 497; Weber, G., Finkenzeller, U., Geelhaar, T., Plach, H.J., Rieger, B., and Pohl, L., 1988, Int. Symp. on Liq. Cryst., Freiburg, to be published in Liq. Crys.] is required. These AMDs are very well suited for TV applications and consequently are of high commercial interest. For these applications some physical properties of the liquid crystals become more important than for passive TN displays. Some of the decisive properties for the performance of an AMD are resistivity and stability of the liquid crystal [Togashi, S., Sekiguchi, K., Tanabe, H., Yamamoto, E., Sorimachi, K., Kajima, E., Watanabe, H., Shimuzu, H., Proc. Eurodisplay 84, Sept. 1984: A 210-288 Matrix LCD Controlled by Double Stage Diode Rings, p. 144 ff, Paris; Stromer, M., Proc. Eurodisplay 84, Sept. 1984: Design of Thin Film Transistors for Matrix Addressing of Television Liquid Crystal Displays, p. 145 ff, Paris].

In an AMD the non-linear switching elements are addressed in a multiplex scheme. So they charge the electrodes of a pixel in the limited time they are active. Then they become inactive until they are addressed again in the next cycle. Consequently the change of the voltage on an activated (charged) pixel is a nondesired but a very decisive feature of such a display. The discharge of a pixel is determined by two factors. They are the capacity of the electrodes of the pixel and resistivity of the dielectric material between the electrodes, namely the liquid crystal. The characteristic time constant of the decay of the voltage at a pixel (RC-time) has to be significantly bigger than the time between two adressing cycles (tadr.) . A parameter frequently used to describe the performance of an AMD is the voltage holding ratio HR of a picture element:

$$HR = \frac{V\ (to) + V\ (to + tadr.)}{2\ V\ (to)}$$

As the voltage at a pixel decays exponentially an increase of the holding ratio necessitates liquid crystal materials with exceptionally high resistivities.

There are several points of importance for the resistivity of the liquid crystal inside a display, e.g. orientation layers, curing condition of the orientation material. But by no means less important are the electrical properties of the liquid crystal used. Especially the resistivity of the liquid crystal in the display determines the magnitude of the voltage drop at the pixel. Several mixtures are known which meet most of these demands and are based on fluorinated LCs instead of the conventional cyano LCs, which have a poor holding ratio and high viscosity. This replacement, however, does not only result in deep temperature problems due to the lower nematogenity and solubility of many fluoro LCs but also in a considerable decrease of the birefringence.

The compositions of the present invention are also useful for an electrooptical system

- which contains, between 2 electrode layers, a liquid-crystal mixture and a further optically transparent polymeric medium, one of the electrode layers being formed as an active matrix having nonlinear addressing elements integrated into the pixel, while the other electrode layer forms the counterelectrode,
- whose liquid-crystal molecules have an irregular alignment in the switched-off state,
- in which one of the refractive indices of the liquid-crystal mixture essentially corresponds to the refractive index of the medium $n_m$ and/or in which the quotient of the mass of the liquid-crystal mixture and the mass of the optically transparent medium is 1.5 or more, and

– which has reduced transmission in one of the two switching states compared with the other state, irrespective of the polarization of the incident light.

The optically transparent medium may contain liquid-crystal microdroplets which are delimited from one another or may form a sponge-like, 3-dimensional network whose pores, which are interconnected to a greater or lesser extent, contain the liquid crystal. The term liquid-crystal microdroplets characterizes small liquid-crystal compartments which are delimited from one another, but in no way necessarily have a spherical shape, but may have an irregular shape and/or be deformed.

If the optically transparent medium contains liquid-crystal microdroplets, it is denoted below as a microdroplet system; if, by contrast, it has a sponge-like, 3-dimensionally cross-linked structure, the medium is characterized by the term network.

NCAP and PDLC films (NCAP = nematic curvilinear aligned phases, PDLC = polymer dispersed liquid crystal) are examples of microdroplet systems. Such arrangements are described, for example, in US 4,435,047, EP 0,272,582, US 4,688,900, US 4,671,611 and Mol. Cryst. Liq. Cryst. Inc. Nonlin. Optics 157 – (1988) 427. By contrast, the arrangement described in EP 0,313,053 is a network or PN system (PN = polymer network), in which the optically transparent medium has a sponge-like network structure.

The nonlinear elements used to produce the active matrix can have 2 or 3 connections. The elements having 2 connections are, for example, α-Si:H diodes (N. Szydloe et al., Proc. 3rd Int. Display Res. Conf., Kobe; SIP Los Angeles, 1983, p. 416), NINα-Si:H diodes (Z. Yaniv et al., Conf. Rec. 1985 Intern. Display Research Conference, IEEE, New York, 1985, p. 76), α-Si:H ring diodes (S. Togashi et al., Proceedings of the 4th International Display Research Conference, SEE, Paris, 1984, p. 141), MIM or MSI diodes (metal-insulator-metal, metal-silicon nitride-indium tin oxide; D.R. Baraff et al., Digest SID International Symposium, Los Angeles, 1980, p. 200; M. Suzuki et al., Proceedings of the 6th International Display Research Conference, Japan Display '86, 1986, p. 72) or ZnO varistores (D.E. Castleberry et al., SID '82 Digest, 1982, p. 246). The nonlinear elements having 3 connections are thin-film transistors (TFT), of which several types are discussed, differing through the semiconductor material used (for example α-Si:H, p-Si, CdSe, Te and further materials; see for example, P.M. Knoll, Displays, Heidelberg 1986, p. 216; T. Nishimura, Mat. Res. Soc. Symp. Proc. 33 (1984) 221; C.S. Bak et al., Mat. Res. Soc. Symp. Proc. 33 (1984) 215; W.G. Hawkins et al., Mat. Res. Soc. Symp. Proc. 33 (1984) 231; M. Matsuura et al., SID 1983 Symposium Digest, 1983, p. 148).

If nonlinear elements having 3 connections are used, only one connection is generally necessary for the counterelectrode, while the counterelectrode is usually also scanned in the case of active matrix addressing based on elements having 2 connections. However, active matrix addressing based on elements having 2 connections in which only one electrode is scanned has also been proposed (Y. Baron et al., Proceedings of the 6th International Research Conference 1986, Japan Display '86, p. 86), and furthermore the use of TFTs as an element having only 2 connections has also been discussed (C. Hilsum et al., Displays, January 1986, p. 37).

Futher details on the addressing of liquid-crystal displays by an active matrix of nonlinear elements are given, for example, in A.H. Firester, SID, 1987, Society for Information Display Seminar, Seminar 5: Active Matrices for Liquid Crystals, E. Kaneko, Liquid Crystal Displays, KTK Scientific Publishers, Tokyo, Japan 1987, chapters 6 and 7, and P.M. Knoll, Displays, Heidelberg, 1986, p. 216, ff.

Polarisers are not required for operating microdroplet or network systems, and these systems thus have high transmission. Due to these favorable transmission properties, microdroplet or network systems provided with active matrix addressing have been proposed, in particular, for projection applications, but also for displays having a high information content and further applications.

The liquid-crystal mixtures used in the production of microdroplet or network systems must satisfy a very wide variety of demands. Thus, one of the refractive indices of the liquid crystal in microdroplet systems is selected so that it more or less coincides with the refractive index of the medium $n_m$.In network systems, matching of the refractive indices is not absolutely necessary since the liquid-crystal content in the light-modulating layer is usually very much greater, but may be carried out in order to increase the light transmission and the contrast.

The liquid-crystal mixture may be dielectrically positive or dielectrically negative. the use of dielectrically positive liquid-crystal mixtures is preferred, and in this case the ordinary refractive index $n_o$ is generally matched to the refractive index of the matrix $n_m$. Other matchings are described in the literature (see, for example, EP 0,272,585) or can be indicated without difficulty by a person skilled in the art.

The matching of the refractive indices means that, in the addressed state, incident light sees virtually no difference in refractive index between the aligned liquid-crystal molecules and the medium, and the arrangement appears transparent. Furthermore, the liquid crystal should have a high clearing point, a broad nematic range, no smectic phases down to low temperatures and high stability and should be characterized

by an optical anisotropy Δn and flow viscosity η which can be optimized with respect to particular application and by a high dielectric anisotropy Δε. Furthermore, the liquid-crystal mixture should be readily compatible with the monomers and/or prepolymers of the polymer used to produce the microdroplet or network system and should be characterized by low solubility in the cured polymer.

A number of materials and processes have been proposed hitherto for production of the matrix. Thus, for example, NCAP films are obtained by the process described in US 4,435,047 by intimately mixing the encapsulating polymer material, such as, for example, polyvinyl alcohol, the liquid-crystal mixture and a carrier material, such as, for example, water, in a colloid mill. By contrast, in the PIPS (polymerization induced phase separation) process described in Mol. Cryst. Liq. Cryst. Inc. Nonlin. Optics 157 (1988), 427, and in the process indicated in EP 0,272,585, the liquid-crystal mixture is first mixed with monomers or oligomers of the film-forming polymer before the polymerization is initiated. The microdroplet system described in Mol. Cryst. Liq. Cryst. Inc. Nonlin. Opt. 157 (1988), 427, is based on an epoxide film, while the arrangement indicated in EP 0,272,585 is an acrylate system.

Addressing of the microdroplet or network system by means of an active matrix has a further crucial criterion in addition to the requirements mentioned above which must be satisfied by the liquid-crystal mixture, the monomers of prepolymers and the cured polymer. This is associated with the fact that, with respect to the particular active nonlinear element, each pixel is a captive load which is charged in the rhythm of the addressing cycle. It is of crucial importance here that the voltage applied to an addressed pixel only drops by a small amount until the pixel is recharged in the next addressing cycle. A quantitative measure of the drop in voltage applied to a pixel is the so-called holding ratio (HR), which is defined as the ratio between the drop in voltage over a pixel in the nonaddressed state and the applied voltage; a method of determining the HR is indicated, for example, in B. Rieger et al., Conference Proceedings of the Freiburger Areitstagung Flüssigkristalle [Freiburg Liquid-Crystals Conference], Freiburg 1989. Electro-optical systems having a low or relatively low HR have inadequate contrast.

Although considerable efforts have already been made to optimize microdroplet and network systems with respect to the liquid-crystal mixture used and the polymer system, only few investigations are found in the literature on electrooptical systems based on microdroplet or network systems and having active matrix addressing, and no new concepts have hitherto been proposed for the provision of electrooptical systems having a high HR. The systems indicated hitherto do not satisfactorily meet the requirements for favorable properties of the liquid-crystal mixture used, the monomers or oligomers and the cured polymer while at the same time having a high HR of the overall system.

There is thus still a great need for liquid-crystal composition having a high birefringence, a high resistivity and other suitable material properties for use in AMDs such as a broad nematic mesophase range with an extremely low transition temperature smectic-nematic and no crystallization at low temperatures.

The invention has for its object to provide a liquid-crystal composition with a high birefringence and a very high resistivity which meets also the other demands.

It has now been found that a nematic liquid-crystal composition based on terminally and laterally halogenated compounds, characterized in that it comprises about 20 to 90 % by weight of one or more compounds from group A1:

group A1:

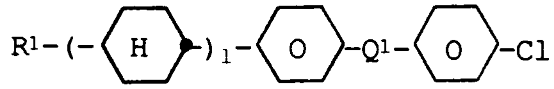

wherein $R^1$ denotes a straight-chained alkyl, alkenyl or oxaalkyl group of 2 to 7 carbon atoms, 1 is 0 or 1 and $Q^1$ is

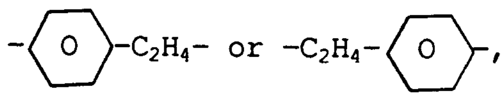

whereby one or two of the 1,4-phenylene groups in group A1 compounds may also carry in total 1, 2 or 3 lateral fluoro substituents, and about 10 to 40 % by weight of one or more compounds from group A2:

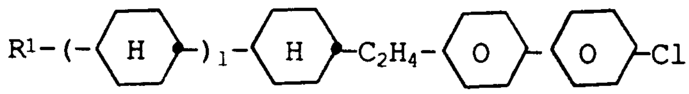

wherein $R^1$ and l are as defined above and one or two of the 1,4-phenylene groups in group A2 compounds may also carry in total 1, 2 or 3 lateral fluoro substituents, is highly suited for AMD application. Very high RC time values and a good holding ratio can be obtained in AMDs. These compositions also show a reduced viscosity, an optical anisotropy $\Delta n$ of > 0.16 (preferably ≧ 0.18), clearing point ≧ 70 °C (preferably ≧ 80 °C), low threshold voltages of approx. 2.2 Volts (< 2.1 Volt are achievable), allow operation in AMDs in the second or in a higher minimum of transmission and/or do not exhibit crystallization and smectic phases, respectively, at low temperatures. Values for the voltage holding ratio for compositions of the present invention are typically ≧ 98 % at 20 °C.

The invention thus relates to a composition as defined above and also to an electrooptical system

- which contains, between 2 electrode layers, a liquid-crystal mixture and a further optically transparent polymeric medium, one of the electrode layers being formed as an active matrix having nonlinear addressing elements integrated into the pixel, while the other electrode layer forms the counterelectrode,
- whose liquid-crystal molecules have an irregular alignment in the switched-off state,
- in which one of the refractive indices of the liquid-crystal mixture essentially corresponds to the refractive index of the medium $n_m$ and/or in which the quotient of the mass of the liquid-crystal mixture and the mass of the optically transparent medium is 1.5 or more, and
- which has reduced transmission in one of the two switching states compared with the other state, irrespective of the polarization of the incident light, where
- the liquid-crystal mixture contains one or more compounds selected from group A 1 and group A 2 and
- the polymerization of the medium is initiated by a photoinitiator which forms free radicals.

For the formation of the optically transparent polymeric medium, olefinically unsaturated monomers, oligomers or prepolymers which can be initiated by means of free raidcals, ore mixtures of oligormers and/or prepolymers with unsaturated monomers can be used. The monomers, oligomers, prepolymers or mixtures thereof also denoted below as olefinically unsaturated precursors are selected so that

- the liquid-crystal mixture is readily miscible with the olefinically unsaturated precursor,
- the liquid-crystal mixture has low solubility in the optically transparent medium, and
- the refractive index of the optically transparent medium essentially corresponds to one of the refractive indices of the liquid-crystal mixture, generally the ordinary refractive index $n_o$.

Through a suitable choice of the respective olefinically unsaturated precursor, the properties of the refractive index, solubility behavior toward the liquid-crystal mixture, hardness, flexability, etc. , can be varied within a broad range and optimized with respect to the specific requirements. The miscibility of the olefinically unsaturated precursor with the liquid-crystal mixture can also be varied within a broad range and customized through a suitable modification of the precursor compounds. A person skilled in the art can compose olefinically unsaturated precursors routinely and without any inventive step from the large pool of olefinically unsaturated compounds in such a manne that thre above mentioned requirements are satisfied.

A list of classes of suitable olefinically unsaturated compounds is given below, but this should be regarded as illustrative and is intended merely to illustrate the invention, but not to represent a limitation:

Vinyl, chlorides, vinylidene chlorides, acrylonitriles, methacrylonitriles, acrylamides, methacrylamides, methyl, ethyl, n- and tert.-butyl, cyclohexyl, 2-ethylhexyl, benzyl, phenyloxyethyl, hydroxyethyl, hydroxypropyl, lower alkoxyethyl and tetrahydrofurfuryl acrylates and methacrylates, vinyl acetates, propionates, acrylates and succinates, N-vinyl-pyrrolidones, N-vinylcarbazoles, styrenes, divinylbenzenes, ethylene diacrylates, 1,6-hexanediol diacrylates, bisphenol A diacrylates and dimethacrylates, trimethylolpropane diacrylates, pentaerythritol triacrylates, triethylene glycol diacrylates, ethylene glycol dimethacrylates, tripropylene glycol triacrylates, pentaerythritol triacrylates, pentaerythritol tetraacrylates, ditrimethylpropane tetraacrylates and dipentaerythritol pentaacrylates and hexaacrylates.

Further suitable olefinically unsaturated precursors are indicated, for example, in EP 0,272,585 and EP 0,313,053.

The mixture of the olefinically unsaturated precursor and the liquid-crystal mixture may optionally contain further additives, such as, for example, surface-active substances for improving the dispersibility of the liquid-crystal mixture, antioxidants, light stabilizers, etc. These additives should have the highest possible specific resistance and should have been appropriately purified. Since such additives are

frequently only added in low or very low concentrations which are significantly lower than the initiator concentration, a relatively low value for the specific resistance can sometimes be tolerated without the HR of the electrooptical system dropping excessively; this is the case, in particular, if the concentration of the additives, based on the weight of the overall system, is less than 1.0 % and in particular less than 0.5 %.

The compositions of the present invention preferably contain two, three, four or more compounds from group A1. Preferred compositions comprise 30 to 50 % by weight of one or more compounds from group A1 and 15 to 30 % by weight of one or more compounds from group A2.

Preferably the compositions simultaneously comprise compounds from groups A1 and A2 wherein in each case at least one 1,4−phenylene group is laterally substituted by 1 to 3 fluorine atoms.

The compounds from groups A 1, A 2,and group 0 are known from the European Patent Appln. 0 387 032 and the international Patent Application WO 89/02884 or can be prpared in analogy to known compounds.

Preferred compositions also comprise one or more compounds from group 0 having two rings:

group 0: 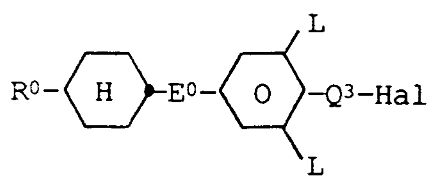

where $R^0$ denotes a straight−chain alkyl group of 2 to 7 carbon atoms, $E^0$ is $-(CH_2)_4-$, $-(CH_2)_2-$, $-CO-O-$ or a single bond, each L is independently H or F, $Q^3$ is $CF_2$, $OCF_2$, OCHF or a single bond and Hal is F or Cl. Preferably $E^0$ is $-(CH_2)_2$ or a single bond, $Q^3$ is a single bond and one of L is H and the other L is H or F.

The compositions according to this invention preferably comprise 6 to 30 % by weight and especially 8 to 25 % by weight of components from group B1 and B2 in total. The preferred weight percent ranges for the other groups (if present) are as follows:

group 0: 3 to 20 %, especially 5 to 10 %

In the following some preferred embodiments of the invention are given:

- The nematic LC composition comprises one or more compounds from group A1a:

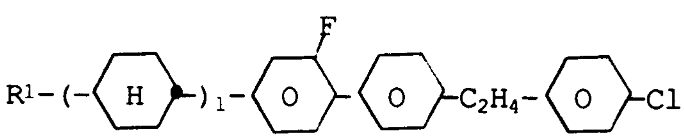

- The nematic LC composition comprises one or more compounds from group A2a:

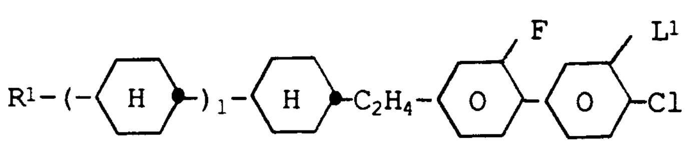

  wherein $L^1$ is H or F.
- The nematic LC composition comprises one or more compounds from group B1:

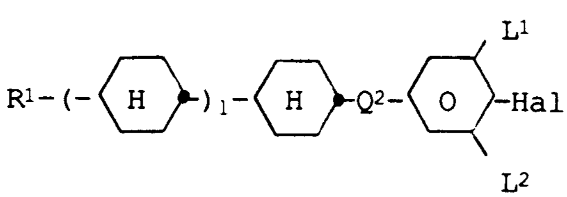

wherein $R^1$, l and $L^1$ are as defined above, $Q^2$ is

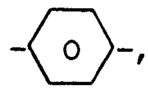

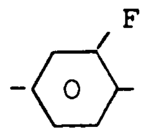 or 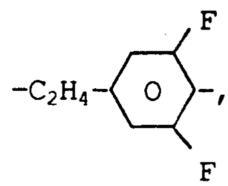

$L^2$ is H or F, and Hal is F or Cl.

- The nematic LC composition comprises one or more compounds from group B1a:

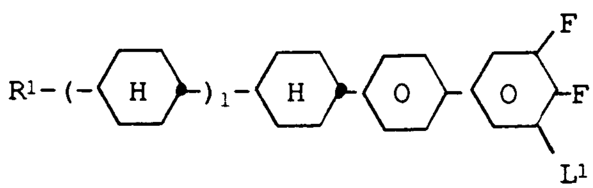

wherein $L^1$ is H or F.

- The nematic LC composition comprises one or more compounds from group B1b:

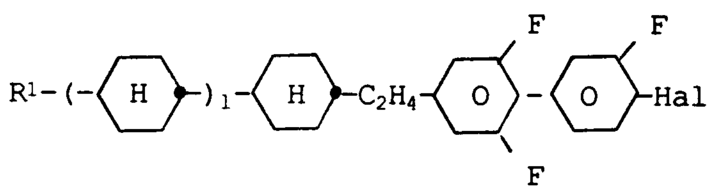

wherein Hal is F or Cl.

- The nematic LC composition according to at least one of Claims 1 to 6, characterized in that it comprises one or more compounds from group B2:

group B2:

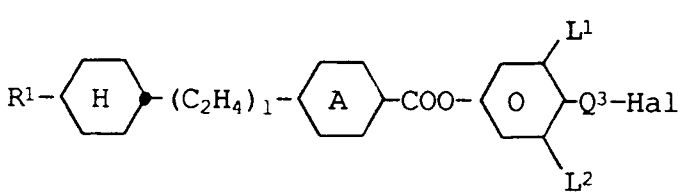

wherein $R^1$, l, $L^1$, $L^2$ and Hal are as defined above, A is trans-1,4-cyclohexylene, 1,4-phenylene or 3-fluoro-1,4-phenylene and $Q^3$ is $CF_2$, $OCF_2$, OCHF or a single bond.

- The nematic liquid-crystal composition comprises two or more compounds from each of the groups A1 and A2.

- The nematic liquid-crystal composition comprises 35 to 50 % (preferably 40 to 45 %) by weight of two or more compounds from group A1 and 15 to 30 % (preferably 20 to 25 %) by weight of two or more compound from group A2.
- The nematic liquid-crystal composition comprises one or more compounds from group C1:

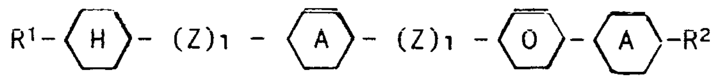 C 1

wherein $R^1$, $R^2$, l and A have the meaning given above and Z is COO or $CH_2CH_2$, preferably selected from $C1_a$ to $C1_e$

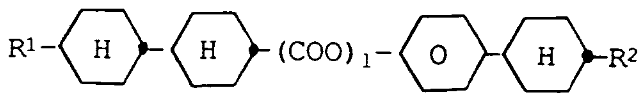 C1a

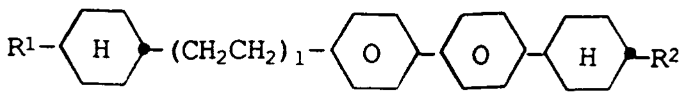 C1b

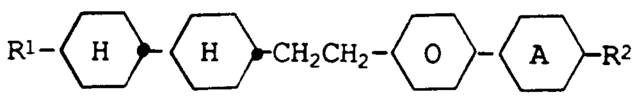 C1c

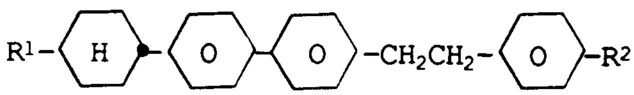 C1d

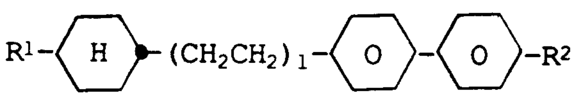 C1e

wherein $R^1$, A and l have the meaning give above, $R^2$ has one of the meangings given for $R^1$ and the 1,4-phenylene groups in C1a to C1e may also be optionally substituted by fluorine.
- The nematic liquid-crystal composition consist essentially of the components listed above.

Preferably the components from groups A1 and A2 form the basis of the claimed compositions and constitute at least 60 % (preferably at least 70 %) by weigh of the compositions. It is, however, also possible to use besides components from the groups above also other LC components in smaller percentages for fine-tuning the claimed compositions.

The preparation of the compositions according to the invention is effected in the conventional manner. In general, the desired amount of the components which is used in the smaller amount is dissolved in the componentns which constitutes the main constituent, preferably at elevated temperature. If this temperature is chosen to be above the clearing point of the main constituent, the completeness of the process of dissolving can be observed particularly easily.

By means of suitable additives the liquid crystal phases according to the invention can be modified in such a way that they can be used in any kind of AMD.

A person skilled in the art can select, from the large pool of nematic or nematogenic substances, additives to the liquid-crystal mixtures described in such a manner that the birefringence $\Delta n$ and/or the ordinary refractive index $n_o$ and/or other refractive indices and/or the viscosity and/or the dielectric anisotropy and/or further parameters of the liquid crystal are optimized with respect to the particular application.

The electrooptical systems according to the invention are characterized by favorable values for the threshold voltage and the steepness of the electrooptical characteristic line and by high UV and heat stability, high contrast and in particular by a high HR - even at elevated temperatures and during UV irradiation.

The problems which occur on addressing microdroplet or network systems by means of an active matrix are solved better by the electrooptical system according to the invention than in arrangements of this

type described hitherto.

The examples below serve to illustrate the invention without limiting it. In the examples, the melting point and clear point of a liquid crystal substance are given in degrees Celsius. The percentages are by weight.

The following acronyms are used for the components of the mixtures of the following examples:

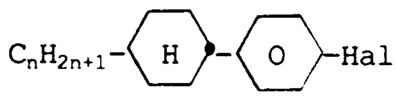

PCH-nHal (Hal = F or Cl)

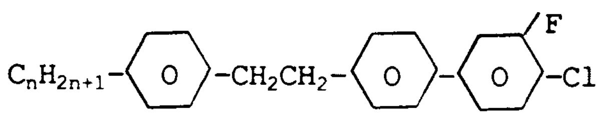

BEP-nCl.F

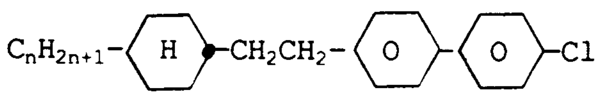

CEB-nCl

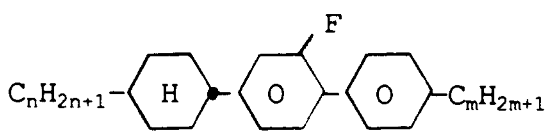

BCH-nmF

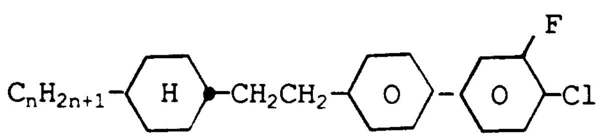

CEB-nCl.F

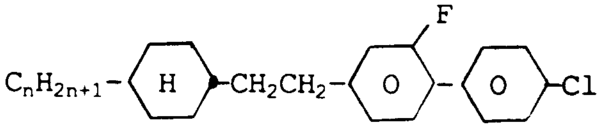

FCEB-nCl

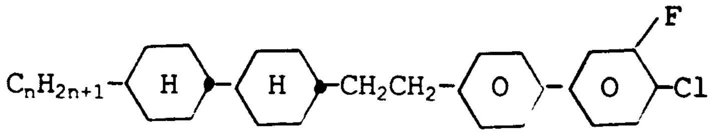

CCEB-nCl.F

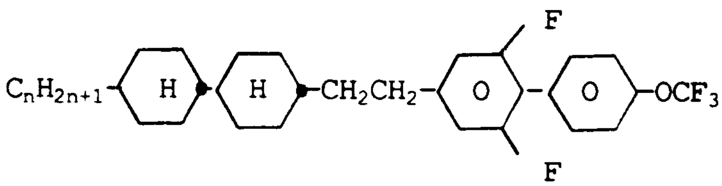

CCEUP-nOCF$_3$

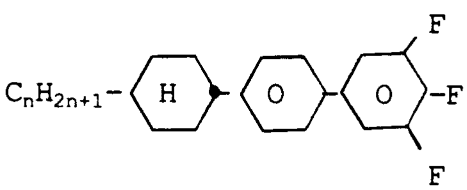

BCH-nF.F.F

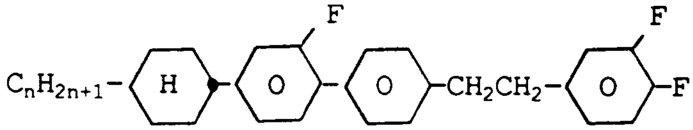

CFET-nF.F

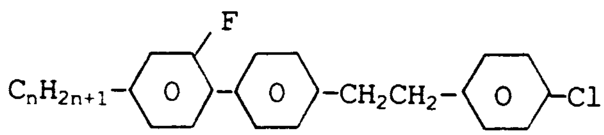

FET-nCl

(FETeu is a mixture of 39.56 % of FET - 2Cl, 20.11 % of FET - 3Cl and 40.33 % of FET - 5Cl)

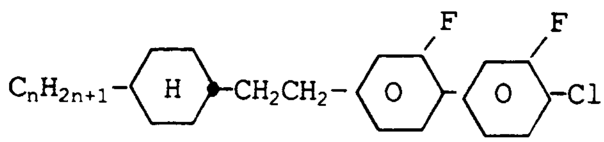

FCEB-nCl.F

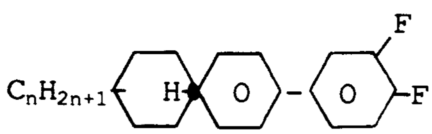

BCH-nF.F

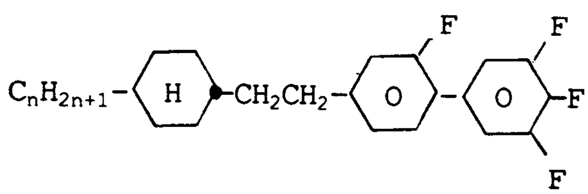

FCEB-nF.F.F

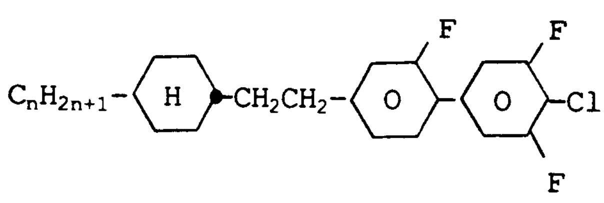

FCEB-nCl.F.F

Example 1

a)

| Composition | (weight %) |
|---|---|
| PCH-5Cl | 11.38 |
| BEP-2Cl.F | 29.51 |
| BEP-3Cl.F | 14.76 |
| BEP-5Cl.F | 23.85 |
| CEB-3Cl | 9.08 |
| CCEB-3Cl.F | 5.74 |
| CCEUP-30$CF_3$ | 5.68 |

b) The electrooptical liquid crystal system is prepared by various processes 1.1 - 1.3 and 2.

1. Microdroplet matrix systems

1.1 The liquid crystal mixture from a) is stirred at room temperature with the adhesive NOA 65 (Norland Products) which can be cured by UV irradiation in the ratio 1.6:1 until a clear solution is obtained, which is put, together with spacers (20 µm), between 2 transparent glass substrates provided with electrode layers. The glass substrates are pressed together whereby a uniform film having a thickness of 20 µm is obtained which is cured by UV irradiation for 1 minute.

1.2 The liquid crystal mixture from a) is stirred at room temperature with Epikote 828 and Capcure 3-800 (Miller Stephenson Company) in the ratio 1:1:1 until a clear solution is obtained; the stirring time is kept as brief as possible, as the solution is already cured after about 1/2 h at room temperature. The solution is put, together with spacers (20 µm), between 2 transparent glass substrates provided with electrode layers, which are pressed together whereby a uniform film having a thickness of 20 µm is obtained. The films can be heated to temperatures up to 100 °C in order to accelerate the curing process.

1.3 5 g of the liquid crystal mixture from a) are stirred at 2,000 rpm at room temperature for 2 minutes with 15 g of 20 % aqueous PVA solution. The solution obtained is degassed for 24 h and applied ain a thin layer, together with spacers (20 µm), to a glass substrate provided with an electrode layer. The arrangement is dried at 85 °C for 1 h, prior to applying a second glass substrate provided with an electrode layer, whereby a uniform film having a thickness of 20 µm is obtained. The system thus obtained is dried at 85 °C for a further 24 h.

2. Network

The liquid crystal mixture from a) is stirred with trimethylolpropane triacrylate as a polymerizable compound and 2-hydroxy-2-methyl-1-phenylpropan-1-one (Darocure 1173, commercial product of E. Merck, Darmstadt) as a photoinitiator in the ratio 80:19.8:0.2 and put between two glass plates provided with electrode layers with addition of spacers having a thickness of 20 µm. In order to cure the polymer, the system obtained was passed through the field of radiation of a halogen lamp (70 W/cm) at a defined rate (3 m/min).

The electrooptical systems prepared according to processes b) 1.1 - 1.3 and 2 are distinguished by a wide working temperature range, favorable values for the electrooptical parameters and their temperature dependence and in particular by a low threshold voltage.

Example 2

| Composition | (weight %) |
|---|---|
| Composition of example 1 | 80.0 |
| BCH-5F.F.F | 20.0 |

Example 3

| Composition | (weight %) |
|---|---|
| Composition of example 1 | 80.0 |
| BCH-3F.F.F | 20.0 |

Example 4

| Composition | (weight %) |
|---|---|
| Composition of example 1 | 80.0 |
| CFET-5F.F | 20.0 |

Example 5

| Composition | (weight %) |
|---|---|
| Composition of example 1 | 80.0 |
| CFET-3F.F | 20.0 |

Examples 6 to 11 are given in the following table:

| Example | 6 | 7 | 8 | 9 | 10 | 11 |
|---|---|---|---|---|---|---|
| FETeu | 74.9 | 74.86 | 74.95 | 74.51 | 74.51 | 67 |
| FCEB-3Cl | 11.22 | - | 9.42 | - | 4.44 | 11 |
| FCEB-5Cl | 13.88 | - | - | 10.10 | 4.96 | 22 |
| FCEB-3Cl.F | - | 12.23 | 15.69 | | 7.85 | - |
| FCEB-5Cl.F | - | 12.91 | - | 14.95 | 8.24 | - |
| N-I (°C) | 84 | 75 | 78 | 80 | 78 | 78 |
| $\eta_{20}$ ($mm^2/s$) | 33 | 35 | 33 | 34 | 34 | 32 |
| $\Delta n$ | 0.208 | 0.200 | 0.206 | 0.202 | 0.205 | 0.201 |
| $n_0$ | 1.526 | 1.526 | 1.527 | 1.526 | 1.526 | 1.525 |
| $V_{th}$ | 2.61 | 2.40 | 2.49 | 2.51 | 2.40 | 2.43 |
| $V_{SAT}$ | 3.45 | 3.10 | 3.24 | 3.26 | 3.16 | 3.16 |

Example 12

| Composition | (weight %) |
|---|---|
| FETeu | 40.2 |
| BCH - 3F.F | 10.0 |
| BCH - 5F.F | 15.0 |
| FCEB - 3Cl | 11.6 |
| FCEB - 3Cl.F | 13.6 |
| FCEB - 3F.F.F | 10.0 |

$\eta_{20}$ ($mm^2/s$) : 31

Examples 13 to 16 are given in the following table:

| Example Composition (weight %) | 13 Composition of example 10 90.0 FCEB - 3F.F.F 10.0 | 14 Composition of example 10 90.0 FCEB - 3Cl.F.F 10.0 | 15 Composition of example 10 90.0 BCH - 3F.F 10.0 | 16 Composition of example 10 90.0 BCH - 3F.F.F 10.0 |
|---|---|---|---|---|
| N - I (°C) | 74.8 | 76.4 | 81.1 | 77.7 |
| $\eta_{20}$ ($mm^2/s$) | 32.44 | 33.32 | 31.42 | 32.55 |
| $\Delta n$ | 0.19435 | 0.19748 | 0.19819 | 0.19535 |
| $V_{TH}$ (Volt) | 2.131 | 2.178 | 2.342 | 2.22 |

Examples 17 to 22 are given in the following tables:

| Examples | | 17 | 18 | 19 |
|---|---|---|---|---|
| Clearing point [°C] | | 83 | 81 | 83 |
| Viscosity [cSt] 20 °C | | 31 | - | - |
| $\Delta n$ (589 nm, 20 °C) | | 0.1790 | 0.1804 | 0.1812 |
| $n_c$ (589 nm, 20 °C) | | 1.6955 | 1.6981 | 1.6991 |
| $n_0$ (589 nm, 20 °C) | | 1.5165 | 1.5176 | 1.5179 |
| $V_{(90,0,20)}$ | | 2.16 | 2.04 | 2.21 |
| $V_{(10,0,20)}$ | | 2.81 | 2.74 | 2.73 |
| Composition [%]: | FET - 2CL | 15.9 | 17.88 | 17.88 |
| | FET - 3CL | 8.09 | 9.09 | 9.09 |
| | FET - 5CL | 16.21 | 18.23 | 18.23 |
| | FCEB - 3Cl | 11.6 | 6.6 | 11.6 |
| | FCEB - 3Cl.F | 13.2 | 13.2 | 8.2 |
| | BCH - 3F.F | 10 | 10 | 10 |
| | BCH - 5F.F | 15 | 15 | 15 |
| | FCEB - 3F.F.F | 10 | 10 | 11 |

| Examples | | 20 | 21 | 22 |
|---|---|---|---|---|
| Clearing point [°C] | | 86 | 82 | 82 |
| Viscosity [cSt] 20 °C | | – | – | – |
| $\Delta n$ (589 nm, 20 °C) | | 0.1842 | 0.1821 | 0.1824 |
| $n_c$ (589 nm, 20 °C) | | 1.7026 | 1.7003 | 1.7003 |
| $n_0$ (589 nm, 20 °C) | | 1.5184 | 1.5182 | 1.5179 |
| $V_{(90,0,20)}$ | | 2.30 | 1.91 | 2.11 |
| $V_{(10,0,20)}$ | | 2.84 | 2.77 | 2.77 |
| Composition [%]: | FET-2CL | 17.88 | 17.88 | 17.88 |
| | FET-3CL | 9.09 | 9.09 | 9.09 |
| | FET-5CL | 18.23 | 18.23 | 18.23 |
| | FCEB-3Cl | 11.6 | 11.6 | 11.6 |
| | FCEB-3Cl.F | 13.2 | 13.2 | 13.2 |
| | BCH-3F.F | 10 | 10 | 5 |
| | BCH-5F.F | 15 | 10 | 15 |
| | FCEB-3F.F.F | 5 | 10 | 10 |

Examples 23, 24 and 25 are given in the following table:

| Examples | | 23 | 24 | 25 |
|---|---|---|---|---|
| Clearing point [°C] | | 86 | 81 | 81 |
| Viscosity [cSt] 20 °C | | – | – | 27 |
| $\Delta n$ (589 nm, 20 °C) | | 0.1842 | 0.1788 | 0.1783 |
| $n_c$ (589 nm, 20 °C) | | 1.7026 | 1.6968 | 1.6966 |
| $n_0$ (589 nm, 20 °C) | | 1.5184 | 1.5180 | 1.5184 |
| $V_{(90,0,20)}$ | | 2.30 | 2.31 | 2.26 |
| $V_{(10,0,20)}$ | | 2.84 | 3.03 | 2.99 |
| Composition [%]: | FET-2CL | 17.86 | 17.88 | 17.88 |
| | FET-3CL | 9.09 | 9.09 | 9.09 |
| | FET-5CL | 18.23 | 18.23 | 18.23 |
| | FCEB-3Cl | 11.6 | 11.6 | 11.6 |
| | FCEB-3Cl.F | 13.2 | 13.2 | 13.2 |
| | BCH-3F.F | 10 | 10 | 10 |
| | BCH-5F.F | 15 | 15 | 15 |
| | FCEB-3F.F.F | 5 | – | – |
| | PCH-7F | – | 5 | – |
| | PCH-5F | – | – | 5 |

**Table: Physical parameters of Compositions of Examples 1 to 5 and 12**

| | Example 1 | Example 2 | Example 3 | Example 4 | Example 5 | Example 12 |
|---|---|---|---|---|---|---|
| Clearing point (°C) | 85 | 83.3 | 80.8 | 104.4 | 103.3 | 83 |
| Δn (20 °C, 589 nm) | 0.1962 | 0.1808 | 0.1828 | 0.1925 | 0.1950 | 0.179 |
| $V_{10,0,20}$ | 2.44 | 2.13 | 2.07 | 2.70 | 2.63 | 2.16 |

Example 26

a) An electrooptical liquid crystal system, containing a liquid-crystal mixture consists of the following compounds:

| | |
|---|---|
| $FET_{eu}$ | 70 % |
| FCEB-3Cl | 9 % |
| FCEB-3Cl.F | 7 % |
| BCH-52F | 7 % |
| BCH-32F | 7 % |

and has the following physical parameters:

| | |
|---|---|
| clear point | 82.7 °C |
| optical anisotropy | 0.201 |
| $n_o$ | 1.526 |

b) The electrooptical LC system is prepared by the process described in Example 1.1 (concentration of LC in NOA 65 was 33.75 % by weight). In Fig. 1, the relative transmission for this electrooptical system (20 µm cell) is plotted as a function of the applied voltage (sinusoidal alternating voltage (effective values), frequency 100 Hz). This system is distinguished, in particular, by a good contrast and a low threshold voltage.

Fig. 2 shows the relative transmission for a similar electrooptical system using for the mixture of example 25.

**Claims**

**1.** A nematic liquid-crystal composition based on terminally and laterally halogenated compounds, characterized in that it comprises about 20 to 90 % by weight of one or more compounds from group A1:

group A1:

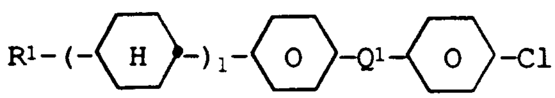

wherein $R^1$ denotes a straight-chained alkyl, alkenyl or oxaalkyl group of 2 to 7 carbon atoms, l is 0 or 1 and $Q^1$ is

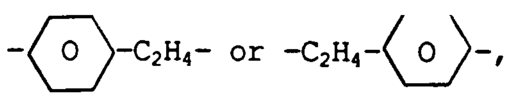

whereby one or two of the 1,4-phenylene groups in group A1 compounds may also carry in total 1, 2 or 3 lateral fluoro substituents, and about 10 to 40 % by weight of one or more compounds from group A2:

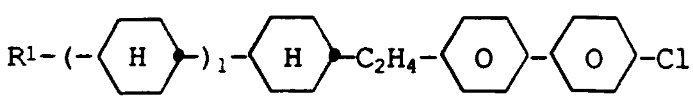

wherein $R^1$ and l are as defined above and one or two of the 1,4-phenylene groups in group A2 compounds may also carry in total 1, 2 or 3 lateral fluoro substituents.

**2.** A nematic LC composition according to Claim 1, characterized in that it comprises one or more compounds from group A1a:

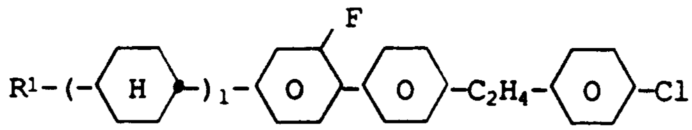

3. A nematic LC composition according to Claim 1 or 2, characterized in that it comprises one or more compounds from group A2a:

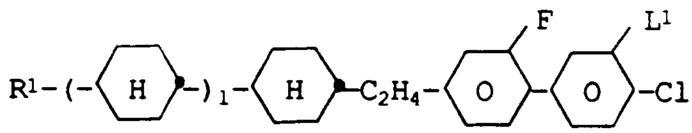

wherein $L^1$ is H or F.

4. A nematic LC composition according to Claim 1, 2 or 3, characterized in that it further comprises one or more compounds from group B1:

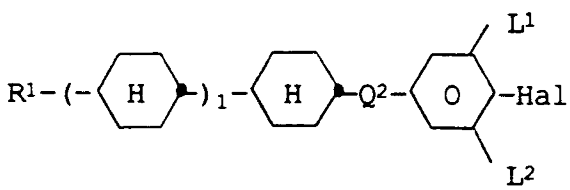

wherein $R^1$, l and $L^1$ are as defined above, $Q^2$ is

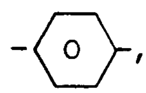

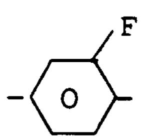 or 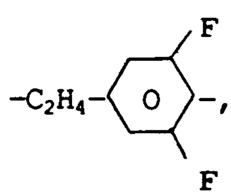

$L^2$ is H or F, and Hal is F or Cl.

5. A nematic LC composition according to Claim 4, characterized in that it comprises one or more compounds from group B1a:

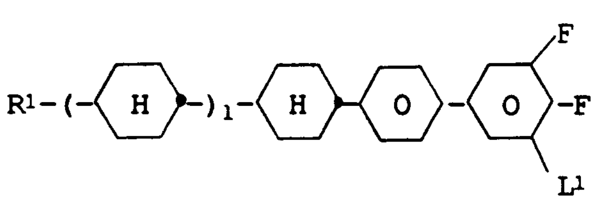

wherein $L^1$ is H or F.

**6.** A nematic LC composition according to Claim 4, characterized in that it comprises one or more compounds from group B1b:

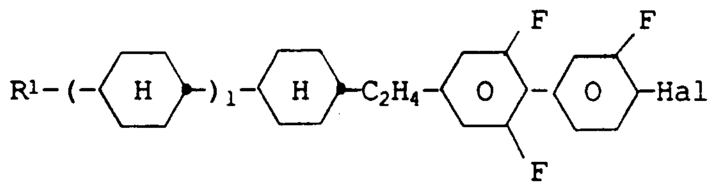

**7.** A nematic LC composition according to at least one of Claims 1 to 6, characterized in that it comprises one or more compounds from group B2:

group B2:

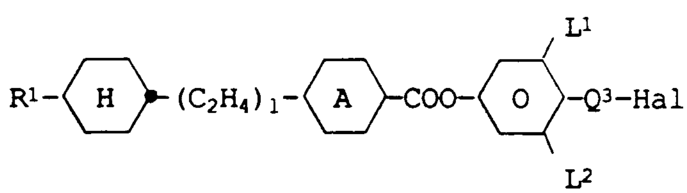

wherein $R^1$, l, $L^1$, $L^2$ and Hal are as defined above, A is trans-1,4-cyclohexylene, 1,4-phenylene or 3-fluoro-1,4-phenylene and $Q^3$ is $CF_2$, $OCF_2$, OCHF or a single bond.

**8.** A nematic liquid-crystal composition according to Claim 1, characterized in that it comprises two, three or four compounds from group A1.

**9.** A nematic liquid-crystal composition according to Claim 1, characterized in that it comprises about 30 to 50 % by weight of one or more compounds from group A1 and 15 to 30 6 by weight of one or more compounds from group A2.

**10.** A nematic liquid-crystal composition according to Claim 9, characterized in that it comprises two or more compounds from each of the groups A1 and A2.

Fig.1

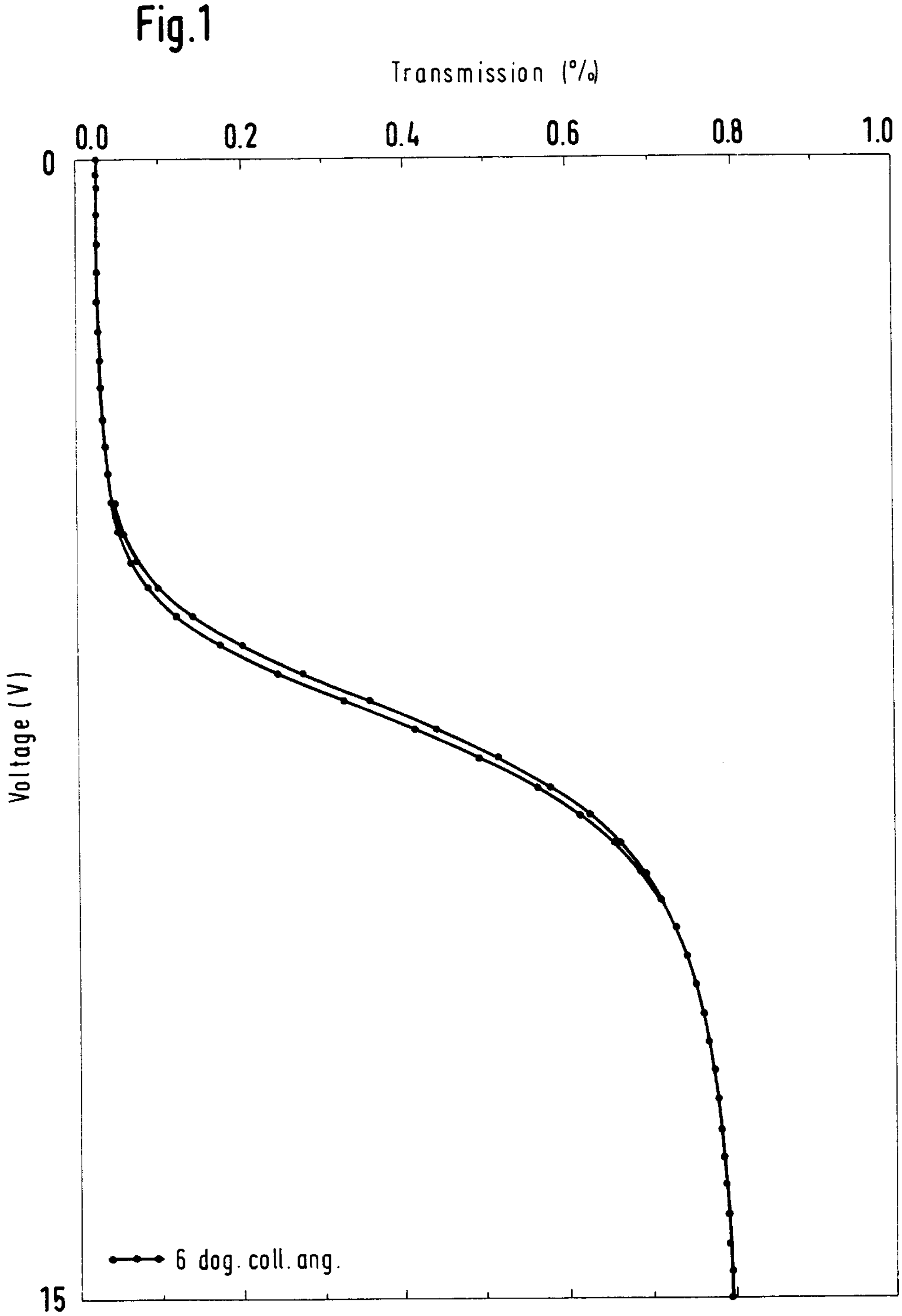

Fig.2

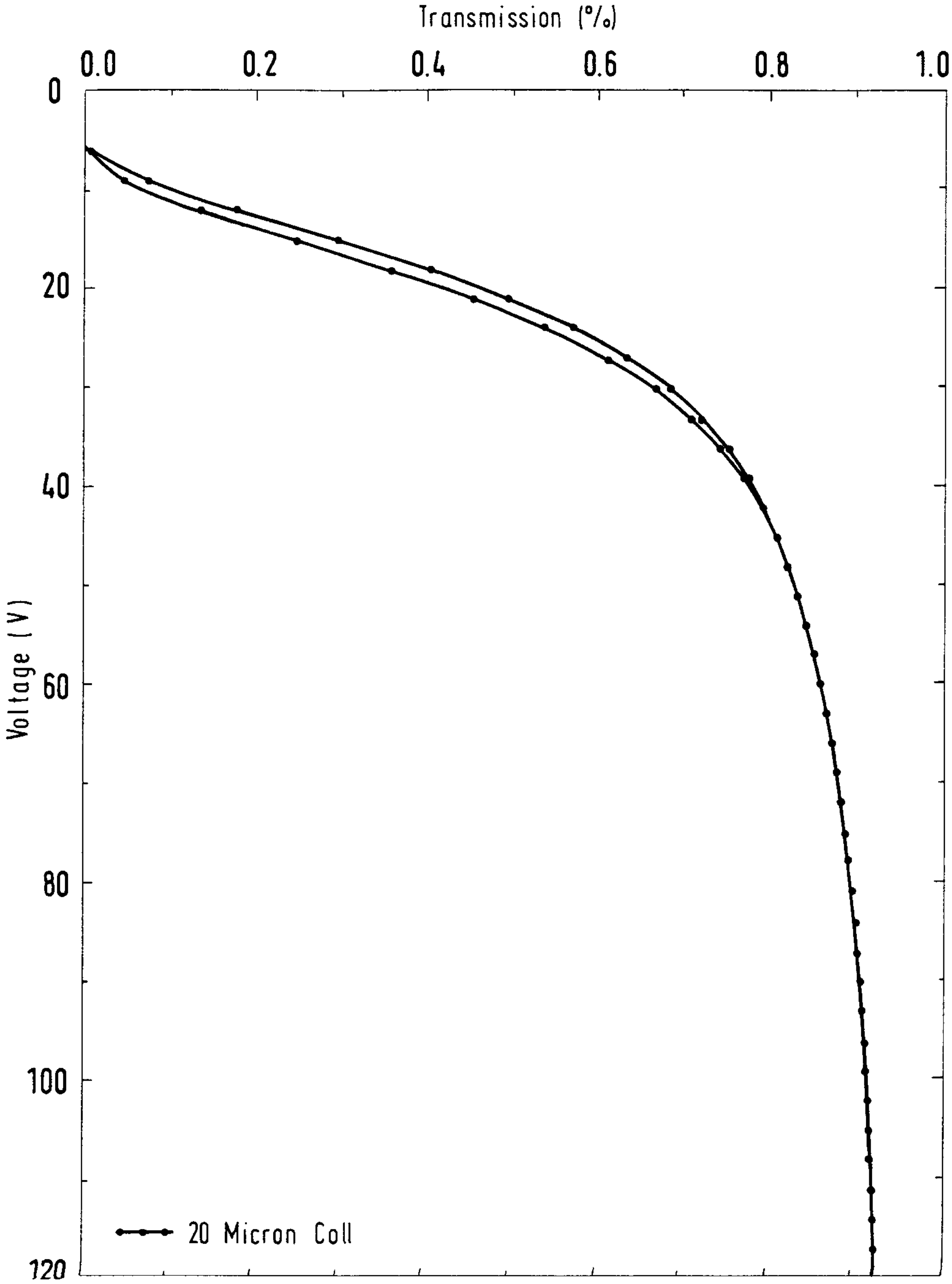
Transmission (%)
0.0
0.2
0.4
0.6
0.8
1.0
0
20
40
60
80
100
120
Voltage (V)
20 Micron Coll

European Patent Office

# EUROPEAN SEARCH REPORT

Application Number

EP 92 11 8679

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 116 396 (MERCK)<br>* claims 1,2,4; example L * | 1,2 | C09K19/42<br>C09K19/54<br>C09K19/30<br>G02F1/1333 |
| Y | WO-A-9 111 497 (MERCK)<br>* examples 28,35 * | 1,4,5 | |
| Y | WO-A-9 115 555 (MERCK)<br>* page 7, line 25 - page 9, line 27 *<br>* examples 1-9 * | 1,4,5 | |
| Y | WO-A-9 103 445 (MERCK)<br>* claims 1-7,19,20; example B * | 1,4,5 | |
| A | GB-A-2 240 987 (MERCK)<br>* claims 1-6 * | 1 | |

TECHNICAL FIELDS SEARCHED (Int. Cl.5 )

C09K

The present search report has been drawn up for all claims

| Place of search | Date of completion of the search | Examiner |
|---|---|---|
| THE HAGUE | 20 JANUARY 1993 | PUETZ C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)